(19) Europäisches Patentamt
European Patent Office
Office européen des brevets

(11) Numéro de publication: **0 197 843**
**B1**

(12) **FASCICULE DE BREVET EUROPEEN**

(45) Date de publication du fascicule du brevet: **25.04.90**

(21) Numéro de dépôt: **86400654.9**

(22) Date de dépôt: **26.03.86**

(51) Int. Cl.[5]: **H 05 H 1/46**, H 01 S 3/097, H 01 S 3/03, H 01 S 3/22

(54) **Dispositif pour l'excitation par ondes hyperfréquences d'un plasma dans une colonne de gaz, permettant notamment la réalisation d'un laser ionique.**

(30) Priorité: **28.03.85 FR 8504698**

(43) Date de publication de la demande: **15.10.86 Bulletin 86/42**

(45) Mention de la délivrance du brevet: **25.04.90 Bulletin 90/17**

(84) Etats contractants désignés: **DE GB**

(56) Documents cités:
**FR-A-2 290 126**
**FR-A-2 346 939**
**US-A-3 493 845**
**US-A-3 753 149**
**US-A-4 477 907**

**IEEE JOURNAL OF QUANTUM ELECTRONICS, vol. QE-14, no. 1, janvier 1978, pages 8-11, IEEE, New York, US; L. BERTRAND et al.: "Comparison of two new microwave plasma sources for HF chemical lasers"**

(73) Titulaire: **CENTRE NATIONAL DE LA RECHERCHE SCIENTIFIQUE (CNRS)**
**15, Quai Anatole France**
**F-75007 Paris (FR)**

(72) Inventeur: **Leprince, Philippe**
**15, rue de la Source**
**F-91190 Gif Sur Yvette (FR)**
Inventeur: **Marec, Jean**
**5, rue du Clos Saint-Jean Boullay Les Troux**
**F-91470 Limours (FR)**
Inventeur: **Saada, Serge**
**8, rue de Paris**
**F-94340 Joinville Le Pont (FR)**
Inventeur: **Bloyet, Emile**
**Les Jardins de Courcelles Bât. D**
**F-91190 Gif Sur Yvette (FR)**
Inventeur: **Migne, Jacques**
**20 rue des Acacias**
**F-91220 Bretigny Sur Orge (FR)**

(74) Mandataire: **Plaçais, Jean-Yves et al.**
**Cabinet Netter, 40, rue Vignon**
**F-75009 Paris (FR)**

**EP 0 197 843 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

(56) Documents cités:
JOURNAL OF PHYSICS D: APPLIED PHYSICS, vol. 12, no. 2, février 1979, pages 219-237, The Institute of Physics, Londres, GB; M. MOISAN et al.: "The theory and characteristics of an efficient surface wave launcher (surfatron) producing long plasma columns"

ELECTRONICS AND COMMUNICATIONS IN JAPAN, vol. 55-C, no. 7, juillet 1972, pages 108-115, Washington, US; I. KATO et al.: "Microwave pulse excided argon ion laser"
APPLIED PHYSICS LETTERS, vol. 46, no. 4, février 1985, pages 323-325, American Institute of Physics, New York, US; C. MOUTOULAS et al.: "A high-frequency surface wave pumped He-Ne laser"

JOURNAL OF APPLIED PHYSICS, vol. 42, no. 9, aou7t 1971, pages 3647-3649, New York, US; R.M. FREDERICKS et al.: "Retuning and hysteresis effects of a rf plamsa in a variable size microwave cavity"

## Description

L'invention concerne d'une manière générale un dispositif pour l'excitation par ondes hyperfréquences (de fréquence préférentiellement supérieure à 100 MHz) d'un plasma dans une colonne de gaz, et plus particulièrement un laser ionique excité par micro-ondes.

Dans le brevet français FR—A—2 290 126, ainsi que dans son certificat d'addition FR—A—2 346 939, il a déjà été proposé d'exciter par des ondes hyperfréquences un plasma dans une colonne de gaz contenue dans un organe tubulaire allongé.

Par ailleurs, les recherches menées depuis longtemps pour tenter d'obtenir un effet laser dans un gaz excité par des ondes hyperfréquences out permis de l'observer (voir Electronics and Communications in Japan, vol. 55-C, No. 7, 1972, Washington, U.S., pages 108—115). Cependant, les réalisations connues ne fournissent pas une puissance et une stabilité temporelle suffisantes pour passer au stade des applications industrielles.

La présente invention permet de résoudre ce problème.

A cet effet, elle vise tout d'abord à augmenter la densité d'énergie fournie par le dispositif décrit dans le brevet et le certificat d'addition précités.

Elle propose ensuite une structure laser ionique fondée sur un tel dispositif, en tant qu'application particulière de l'invention.

L'invention permet également des effets lasers nouveaux, en tant que raies émises et puissance de ces raies entre elles. C'est le cas particulier d'un laser ionique krypton-argon qui émet par deux raies rouge et bleu.

Le dispositif proposé est du type comprenant:

un organe tubulaire propre à contenir la colonne de gaz; et

des moyens formant applicateur micro-ondes entourant l'organe tubulaire, et couplés à celui-ci par un espace annulaire apte à créer, en périphérie de cet organe tubulaire, un champ électrique hyperfréquence dont les composantes longitudinale et radiale sont propres à exciter un plasma dans ladite colonne de gaz.

Selon un premier aspect de l'invention, on prévoit, de part et d'autre de cet applicateur, deux courts-circuits hyperfréquences couplés à l'organe tubulaire, et ajustés pour confiner le plasma dans la portion de l'organe tubulaire qui est comprise entre ses couplages avec lesdits courts-circuits. Le plasma, qui n'est pas homogène le long de l'organe tubulaire, est alors le siège d'ondes hyperfréquences stationnaires de très forte intensité.

Dans ces conditions, il semble que les ondes hyperfréquences produites dans le gaz soient essentiellement des ondes de surface.

Selon un autre aspect de l'invention, les deux extrémités de l'organe tubulaire, munies chacune d'une fenêtre transparente, sont respectivement équipées de miroirs propres à réfléchir longitudinalement une grande partie du rayonnement électromagnétique lié à l'une au moins des raies d'excitation électroniques du gaz contenu dans le tube, ce qui permet d'obtenir un effet laser.

En pratique, l'organe tubulaire comprend un tube capillaire qui s'évase à ses extrémités vers lesdites fenêtres, tandis que sa partie intermédiaire définit une tubulaire annulaire coaxiale, qui s'étend au moins d'un court-circuit à l'autre, et dans laquelle circule un fluide de refroidissement tel qu'un liquide à faible perte diélectrique.

Avantageusement, le fluide de refroidissement est une huile silicone ou un mélange de telles huiles.

Dans un mode de réalisation particulièrement avantageux, l'applicateur micro-ondes comprend un guide d'ondes muni à une extrémité d'une connexion d'alimentation hyperfréquence, et de moyens d'accord, tels qu'un piston à son autre extrémité, ou une vis plongeante, tandis qu'il comporte en partie intermédiaire deux orifices latéraux permettant le passage de l'organe tubulaire, et des moyens qui définissent ledit espace annulaire de couplage de l'organe tubulaire avec le guide d'ondes, près de l'un des orifices latéraux de celui-ci.

Selon un autre aspect de l'invention, les moyens définissant l'espace annulaire de couplage comprennent une gaine conductrice qui entoure l'organe tubulaire depuis le voisinage intérieur de l'un des orifices latéraux du guide d'ondes, jusqu'au-delà de l'autre orifice latéral, après quoi ladite gaine s'écarte radialement de l'organe tubulaire, pour revenir longitudinalement se relier à la paroi latérale du guide d'ondes.

A des fins de réglage, il peut être prévu un organe mobile conducteur, à l'extérieur du guide, entre la partie centrale de ladite gaine conductrice et son retour longitudinal vers la paroi du guide.

Selon un autre aspect de l'invention, du côté de l'orifice latéral du guide qui crée l'espace annulaire de couplage, on prévoit une entretoise conductrice entourant le tube jusqu'au court-circuit, et contribuant à la définition d'un champ électrique hyperfréquence désiré dans ledit espace annulaire.

Selon un autre aspect encore de l'invention, l'organe tubulaire est réalisé en un matériau usinable possédant de faibles pertes diélectriques comme le quartz, l'alumine, ou l'oxyde de béryllium.

Le dispositif peut aussi comporter plusieurs applicateurs micro-ondes, répartis le long de l'organe tubulaire, entre les deux courts-circuits.

Dans un mode de réalisation à un seul applicateur, le tube contenant le gaz possède une partie utile dont la longueur est de l'ordre de une à plusieurs dizaines de centimètres, pour un diamètre de l'ordre de un à plusieurs millimètres.

L'invention peut s'appliquer avec, dans l'organe tubulaire, des gaz ou vapeurs propres à la fluorescence, ou leurs mélanges.

Il est estimé à l'heure actuelle que l'un au moins des composants du gaz doit être doué d'une densité électronique d'au moins $10^{13}$ à $10^{14}$ par centimètre cube.

Ainsi, le ou les gaz ou vapeurs sont choisis dans les matériaux du groupe comprenant l'argon, le krypton, l'hélium, néon (gaz), et le cadmium, l'or, l'argent, le cuivre (vapeurs).

Un fonctionnement particulièrement avantageux a été obtenu avec un mélange d'argon et d'hélium, comprenant de préférence de 40 à 75% d'hélium, au mieux 50% d'hélium.

Il a encore été observé qu'en ajoutant au mélange une quantité substantielle de krypton, on peut obtenir un effet laser double sur des longueurs d'ondes respectivement reliées à des raies d'excitation électronique de l'argon (dans le bleu) et du krypton (dans le rouge).

D'autres caractéristiques et avantages de l'invention apparaîtront à l'examen de la description détaillée ci-après, ainsi que des dessins annexés, sur lesquels:

les figures 1 à 2A, reprises du certificat d'addition FR—A—2 346 939, illustrent deux variantes d'un dispositif connu pour l'excitation par ondes hyperfréquences d'un plasma dans une colonne de gaz;

la figure 3 est une vue en perspective assortie d'une coupe faisant apparaître un premier mode de réalisation du dispositif selon l'invention;

la figure 4 illustre une variante préférentielle du dispositif de la figure 3;

la figure 4A illustre l'agencement de l'organe tubulaire 2 pour un fonctionnement en laser;

la figure 5 illustre une variante à deux applicateurs du dispositif des figures 3 et 4; et

les figures 6 et 7 sont respectivement un graphique illustrant la puissance laser obtenue en fonction de la puissance absorbée en micro-ondes, et un diagramme de l'allure du champ électrique (composantes radiales et longitudinales).

Les figures 3 et suivantes sont à l'échelle, dans leur partie mécanique. L'homme de l'art sait que la géométrie d'un dispositif est fort importante en micro-ondes. En conséquence, ces figures font partie intégrante de la description, pour servir aussi bien à donner un enseignement complet à l'homme de l'art qu'à définir l'objet de l'invention.

La figure 1 fait apparaître un premier mode de réalisation d'un excitateur hyperfréquence de plasma connu. Il comporte une enceinte métallique se présentant sous la forme d'une structure coaxiale et d'un organe de couplage. La structure coaxiale comporte un tube central 5b, ouvert à ses deux extrémités, et entourant un organe tubulaire 2b réalisé par exemple en quartz. La structure comporte également un second tube 8b entourant le tube 5b et coaxial à ce dernier. Une extrémité du tube 8b déborde de l'extrémité correspondante du tube 5b. Cette extrémité du tube 8b est alors fermée par une paroi métallique 11b, percée d'une ouverture centrale destinée à laisser le passage à la colonne 2b. Enfin, l'extrémité du tube 5b est séparée de la paroi 11b par un intervalle 5c. Il est prévu, dans le certificat d'addition FR—A—2 346 939, que la paroi 11b soit d'épaisseur inférieure aux autres parties de la structure (tubes 5b et 8b notamment). Il est également prévu un organe de couplage constitué sous la forme d'une plaque métallique 14b, alimentée par un câble coaxial de préférence rigide et se trouvant au voisinage de l'intervalle 5c, sans toutefois recouvrir ce dernier. La structure se complète d'un organe d'adaptation qui est illustré ici sous la forme d'une vis plongeante 100, c'est-à-dire d'un conducteur métallique allongé disposé radialement d'une manière réglable par rapport à l'organe tubulaire de quartz 2b.

Quoiqu'il permette d'exciter un plasma dans une colonne de gaz, le dispositif de la figure 1 à l'inconvénient de n'opérer qu'à des hyperfréquences d'excitation assez basses, et à une puissance assez faible.

Le certificat d'addition antérieur décrit donc aussi, comme le montre la figure 2, une structure dans laquelle un guide d'ondes 130 de section rectangulaire, qui peut être un guide d'ondes standard, possède des parois latérales 131 et 132 (ses grands côtés) munies d'ouvertures circulaires 133 et 134 destinées à laisser passage au tube de verre 2' contenant la colonne de gaz à exciter. Le guide proprement dit, qui possède une longueur $p_1$, est muni d'un côté d'un élément de transition 135 permettant son alimentation par un câble coaxial (non représenté ici). A l'autre extrémité, il est prévu un piston 136 mobile sous l'effet d'une tige guide 137, et susceptible de se déplacer sur une longueur p.

La figure 2A fait encore apparaître qu'à l'intérieur du guide, il est prévu d'insérer un coin métallique annulaire 138, de sorte que la longueur $p_2$ sur laquelle s'exerce le champ électrique d'excitation soit suffisamment faible pour demeurer toujours inférieure à la longueur d'onde de l'onde de surface que peut créer le couplage.

La Demandeur a découvert tout d'abord qu'il est possible d'augmenter considérablement le rendement du transfert de micro-ondes ou hyperfréquences entre l'applicateur et le tube, un modifiant les dispositifs décrits dans le certificat d'addition FR—A—2 346 939, en référence au brevet principal FR—A—2 290 126.

La figure 3 fait apparaître un premier dispositif selon la présente invention.

Il comporte un applicateur micro-ondes formé d'un guide d'ondes 130 à certains égards semblable à celui de la figure 2. La transition d'alimentation 135 du guide d'ondes est excitée à partir d'un générateur hyperfréquence 101, le cas échéant à travers des équipements de mesure 102 qui peuvent être constitués de tout ou partie des équipements décrits dans le brevet principal FR—A—2 290 126, en particulier en sa figure 4.

Les parois latérales ou grands côtés du guide d'ondes 131 et 132 sont munies respectivement d'orifices 133 et 134 qui, à la différence de la figure 2, laissent maintenant passer largement l'organe tubulaire 2.

Dans sa partie avant, non visible sur la figure 3, le guide d'ondes peut comporter soit un piston d'accord tel que le piston 136 de la figure 2, soit un court-circuit placé en bout de guide, celui-ci étant alors muni d'une ou plusieurs vis de réglage pénétrantes, à la manière de la figure 1. De telles vis, placées entre le générateur hyperfréquence et l'organe tubulaire 2, pourront également être prévues en sus du piston mobile d'extrémité.

Le coéfficient de couplage du guide d'ondes 130 avec la source est alors supérieur à 90%, comme le montrent les équipements de mesure 102.

L'ouverture latérale 134 du guide est la plus grande. Elle est traversée coaxialement par une gaine cylindrique conductrice 141, qui s'étend jusqu'au voisinage de l'autre ouverture 133, dont le diamètre est ici légèrement supérieur au diamètre extérieur de la gaine 141. Il se trouve ainsi ménagé un espace ("gap" ou entrefer) qui permet le couplage du guide d'ondes 130 à l'organe tubulaire 2.

A son autre extrémité, la gaine 141 s'étend radialement par un disque 142, sur lequel vient se monter un retour longitudinal en sens inverse 143, qui vient au contact de la paroi latérale 132 du guide 130, en affleurement de l'ouverture 134. Un organe mobile 145 peut établir un contact en position longitudinale choisie, entre la partie intérieure 141 de cette gaine et son retour 143.

De l'autre côté, une entretoise conductrice 150 est définie par un cylindre central conducteur 153, muni de flasques d'extrémités 154 et 156 qui s'étendent radialement vers l'extérieur.

Le flasque 154 possède un diamètre intérieur plus faible qui celui de l'ouverture 133, contribuant ainsi à la définition de l'espace annulaire 139 précité.

Enfin, et selon un aspect important de la présente invention, on prévoit aux extrémités de l'organe tubulaire 2 des courts-circuits hyperfréquences 110 et 120, constitués de la même manière.

Le court-circuit 110 comprend un cylindre conducteur axial 111, qui définit un espace 119 par rapport au disque 142 déjà cité. A son autre extrémité, le cylindre 111 s'étend radialement par un disque 112, sur lequel vient se connecter un anneau 113 qui revient au contact du disque 142. Le court-circuit réglable est défini par un organe conducteur 115 mobile entre les pièces 113 et 111, tout en faisant un excellent contact électrique avec celles-ci.

La structure du court-circuit 120 est symétrique, étant observé que les mêmes pièces conservent la même référence numérique augmentée de dix unités.

On note enfin $L_1$ la longueur de l'organe 140 à l'extérieur du guide d'ondes 130 et $L_2$ la longueur de l'entretoise 150.

Il a été observé expérimentalement que le plasma, qui n'est pas homogène le long de l'organe tubulaire, est, dans un dispositif selon la figure 3, le siège d'ondes hyperfréquences stationnaires de très forte intensité, dès lors que l'on a convenablement réglé le couplage du guide 130 avec le générateur 101 par le piston ou la vis de réglage précité, ainsi que le couplage du guide avec l'organe tubulaire 2, par ajustement de la position du conducteur mobile 145.

Il s'est alors avéré possible d'observer un effet laser, en donnant à l'organe tubulaire 2 la structure illustrée sur la figure 4A, et en utilisant comme gaz un mélange d'argon et d'hélium.

Après avoir pu observer cet effet laser, le Demandeur a construit le dispositif selon la figure 4.

Celui-ci diffère assez peu de la figure 3. Essentiellement, ayant déterminé la bonne position du court-circuit mobile 145, l'organe 140 de la figure 3 a été remplacé par sa partie utile, réduite donc à ce qui se trouve à droite du court-circuit 145 dans la position voulue de celui-ci.

Il existe d'autres différences, de détails, entre les figures 3 et 4, à savoir:

la présence d'une cale 159 entre l'entretoise 150 et le guide 130;

le fait que les courts-circuits mobiles 115 et 125 sont maintenant représentés dans leur construction détailliée, avec un pluralité de lames-ressorts très conductrices distribuées angulairement pour venir faire contact avec les pièces 111 et 113 d'une part (court-circuit 110), 121 et 123 d'autre part (court-circuit 120). Les expériences ont été poursuivies avec un organe tubulaire 2 constité entièrement en quartz, et possédant la forme illustrée sur la figure 4A. Le tube proprement dit, référence 20, possède un diamètre intérieur de 1,5 mm, pour un diamètre extérieur de 4 mm. Au moins dans la partie comprise entre les courts-circuits 110 et 120, il est chemisé par un autre tube annulaire, dont le diamètre intérieur est de 10 mm, pour un diamètre extérieur de 12 mm. Dans l'espace annulaire entre les deux tubes circule un mélange d'huile silicone servant au refroidissement. Il s'est avéré préférable d'utiliser un mélange de deux types d'huile, dont l'une est très fluide, l'autre moins fluide, les points d'éclair des deux huiles étant différents. Le mélange permet alors d'obtenir la fluidité désirée. Un tel mélange peut être fait notamment avec les huiles silicones vendues par Rhône-Poulenc sous la désignation 47.V.n où n est un nombre donnant la viscosité (n = 10, 20, 30 . . .).

Aux extrémités, le tube central 20 s'évase en 21 et 22, pour être équipé d'un embout 23 et 24 taillé selon l'incidence de Brewster, l'embout étant à chaque fois muni d'une fenêtre collée par adhérence moléculaire.

Enfin, on a placé aux extrémités du tube, des miroirs M1 et M2 propres à réfléchir la majeure partie du rayonnement selon l'axe du tube, comme cela est connu dans la technique des lasers.

La mise en oeuvre du dispositif s'effectue comme suit:

on ajuste d'abord le couplage entre le générateur 101 et le guide d'ondes 130 comme précédemment décrit;

on ajuste ensuite les courts-circuits 110 et 120 pour confiner le plasma entre les deux orifices de couplage 119 et 129 de ces courts-circuits avec le tube. La longueur du plasma est alors d'environ 14 centimètres, la figure 4A étant à l'échelle.

Les essais ont ensuite été conduits avec des pressions de remplissage du tube variables entre 93.33 et 266.64 Pa (0,7 et 2 Torr), pour des conditions de mélange argon-hélium dans laquelle le pourcentage d'hélium en volume variait de 40% à 75%.

La puissance micro-onde appliqué a été rendue variable de 200 watts à 1,5 kilowatt.

Enfin, on a utilisé des miroirs laser de trois types, à savoir:

Rmax = 99,6%, RC = 1,20 mètre;
Rmax = 98,4%, RC = 1,20 mètre;
Rmax = 95,7%, RC = 2,00 mètres;

où Rmax désigne le coefficient de réflexion maximale du miroir, et RC son rayon de courbure.

La longueur de la cavité optique ainsi définie était de l'ordre de 70 centimètres.

On a pu alors observer des raies laser de l'argon sur les longueurs d'ondes suivantes:

457,9 nanomètres,
476,5 nanomètres,
488,0 nanomètres,
496,5 nanomètres,
514,5 nanomètres.

La figure 6 fait aparaître deux courbes montrant la puissance laser obtenue en milliwatts (impulsions longues) en fonction de la puissance micro-ondes en watts, pour deux pressions de remplissage, à savoir 113.32 Pa (0,85 Torr) (points marqués d'un losange) et 173.32 Pa (1,30 Torr) (points marqués d'une croix).

Il s'est avéré possible d'obtenir une décharge laser stable et homogène dans un mélange d'argon et d'hélium, et, de façon assez sureprenante, il est apparu qu'à pression totale constante, le fait d'ajouter de l'hélium permet d'obtenir une puissance laser supérieure, le meilleur mélange étant celui qui comprend 50% d'hélium en volume.

En ajoutant du krypton au mélange, à proportion (en volume) de 40% d'hélium, 30% d'argon et 30% de krypton, par exemple, il a également été possible d'observer les raies laser du krypton à 476,2 nanomètres et 528,0 nanomètres.

En opérant avec d'autres miroirs, on peut obtenir les raies les plus intenses du krypton, dans le rouge, à savoir 647,1 nanomètres et 676,4 nanomètres.

Toutes ces expériences ont été conduites avec un dispositif micro-onde opérant à 2450 Mégahertz.

Il semble bien que ce dispositif excite une onde hyperfréquence de surface, dans le gaz, d'où il résulte un plasma, de très forte intensité. Et l'intensité de ce plasma est apparue suffisante pour produire un effet laser à l'intérieur du gaz contenu dans l'organe tubulaire 2.

Pour observer cet effet, il est important d'attacher une grande attention à l'espace annulaire de couplage 139 entre le guide d'ondes 130 et l'organe tubulaire 2.

La figure 7 illustre schématiquement l'alluré du champ électrique requise à ce niveau, en ses composantes radiale $E_r$ et longitudinal $E_z$.

La figure 7 fait apparaître l'orifice de couplage 139, au niveau de la paroi désignée globalement par 141. On distingue aussi le pourtour externe 20 du tube capillaire contenant le gaz à exciter.

On observera tout d'abord que la composante longitudinale $E_z$ est continue au passage du tube central capillaire 20. En revanche, la composante radiale $E_r$ est discontinue, du fait que l'on passe d'une constante diélectrique positive à la constante diélectrique fortement négative qui est associée à un plasma.

On observera notamment qu'il faut un champ électrique hyperfréquence principalement radial au niveau de l'orifice 139 pour arriver à obtenir un champ essentiellement longitudinal au centre du tube 20, alors que le champ radial s'y trouve presque nul, compte tenu de la symétrie cylindrique.

Pour les expériences ci-dessus, le tube capillaire central 20 était fermé. Après avoir été mis sous vide, il est rempli à la pression totale voulue du mélange choisi. Bien entendu, une variante de l'invention consiste à faire circuler dans le tube 20 un mélange de gaz, à la pression totale choisie.

Par ailleurs, au lieu d'utiliser un organe tubulaire 2 en quartz, on peut en variante le réaliser en alumine, ou encore en oxyde de béryllium.

Pour augmenter la puissance appliqué à la colonne de gaz, on peut avoir recours à la variante du dispositif selon l'invention qui est illustrée sur la figure 5. Celle-ci diffère assez peu de la figure 3. On observera simplement qu'entre le flasque 156 de l'entretoise 150 et le court-circuit d'extrémité 120, on a maintenant mis en place un second applicateur micro-onde constitué d'un guide d'ondes 130A, identique au guide 130, et assorti d'un organe de réglage 140A, identique à l'organe 140 et symétrique de celui-ci.

Les deux guides d'ondes 130 et 130A peuvent être alimentés à partir du même générateur 101, à travers un coupleur 3 dB 103, ou mieux à partir de deux générateurs pilotés pour opérer à la même fréquence. Il a été possible d'observer également un effet laser à partir d'un dispositif de ce genre. Il semble que, dans ces conditions, le plasma soit le siège d'une composition d'ondes hyperfréquences stationnaires de forte intensité.

Le Demandeur estime actuellement que le dispositif selon l'invention peut fonctionner avec une grande variété de gaz ou vapeurs propres à la fluorescence, ainsi qu'avec leur mélange.

Il semble à l'heure actuelle nécessaire que l'un au moins des composants du gaz soit doué d'une densité électronique de $10^{13}$ à $10^{14}$ par centimètre cube, au moins.

Les gaz utilisables sont en particulier l'argon, l'hélium, le krypton, le néon, sous des pressions allant d'une fraction de Torr (1 Torr = 133.322 Pa) à plusieurs dizaines de Torr, de préférence de 133.32 à 1333.22 Pa (1 à 10 Torr).

On peut utiliser également différentes vapeurs métalliques, comme celle de cadmium, d'or, d'argent et de cuivre.

Sur les figures 3 à 5, les parties conductrices du dispositif sont en laiton, de préférence revêtues intérieurement d'une mince couche d'or. Ceci s'étend bien entendu aux courts-circuits d'extrémités réalisés en quarts d'ondes. Les dimensions, en particulier $L_1$ et $L_2$ peuvent être augmentées par nombres entiers de demi-ondes, étant observé qu'il s'agit à chaque fois de la longueur d'onde guidée, telle qu'elle se manifeste dans l'organe tubulaire.

Par ailleurs, on peut appliquer les enseignements de la figure 5 en utilisant un nombre plus élevé d'applicateurs micro-ondes, convenablement distribués en demi-ondes le long de l'organe tubulaire.

La possibilité d'obtenir un laser fonctionnant simultanément dans le bleu et dans le rouge, qu'offre l'invention à partir de mélanges contenant de l'argon et de l'hélium (entre autres mélanges) est intéressante pour différentes applications: technique d'impression ou de copie par laser; laser utilisé en ophtalmologie pour l'action sur la rétine, notamment.

**Revendications**

1. Dispositif pour l'excitation par ondes hyperfréquences d'un plasma dans une colonne de gaz, du type comprenant:

un organe tubulaire (2) propre à contenir la colonne de gaz;

des moyens (130—140) formant applicateur micro-ondes, entourant l'organe tubulaire, et couplés à celui-ci par un espace annulaire (139) apte à créer, en périphérie de cet organe tubulaire, un champ électrique hyperfréquence dont les composantes longitudinale et radiale sont propres à exciter un plasma dans ladite colonne de gaz au voisinage dudit espace annulaire, une onde hyperfréquence de surface étant crée dans le gaz à l'aide de laquelle le plasma s'étend de part et d'autre dudit espace annulaire,

caractérisé en ce que sont prévus, de part et d'autre de cet applicateur, deux courts-circuits hyperfréquences (110, 120) couplés à l'organe tubulaire (2) et ajustés pour confiner le plasma dans la portion de l'organe tubulaire (2) qui est comprise entre ses couplages (119, 129) avec lesdites courts-circuits,

le plasma, qui n'est pas homogène le long de l'organe tubulaire, étant alors le siège d'ondes hyperfréquences stationnaires de très forte intensité.

2. Dispositif selon la revendication 1, caractérisé en ce que les deux extrémités (21, 22) de l'organe tubulaire, munies chacune d'une fenêtre transparente (23, 24), sont respectivement équipées de miroirs (M1, M2) propres à réfléchir longitudinalement une grande partie du rayonnement électromagnétique lié à l'une au moins des raies d'excitation électronique du gaz contenu dans le tube, ce qui permet d'obtenir un effet laser.

3. Dispositif selon la revendication 2, caractérisé en ce que l'organe tubulaire comprend un tube capillaire (20) qui s'évase à ses extrémités (21, 22) vers lesdites fenêtres (23, 24), tandis que sa partie intermédiaire définit une tubulure annulaire coaxiale (26), qui s'étend au moins d'un court-circuit (119) à l'autre (129), et dans laquelle circule un fluide de refroidissement tel qu'un liquide à faibles pertes diélectriques.

4. Dispositif selon la revendication 3, caractérisé en ce que le fluide de refroidissement est une huile silicone ou un mélange de telles huiles.

5. Dispositif selon l'une des revendications précédentes, caractérisé en ce que l'applicateur micro-ondes comprend un guide d'ondes (130) muni à une extrémité d'une connexion d'alimentation hyperfréquence (135) et à son autre extrémité d'un organe d'accord, tel qu'un piston (136), tandis qu'il comporte, en partie intermédiaire, deux orifices latéraux (133, 134) permettant le passage de l'organe tubulaire (2), et des moyens (140) qui définissent ledit espace annulaire (139) de couplage de l'organe tubulaire (2) avec le guide d'ondes, près de l'un (133) des orifices latéraux de celui-ci.

6. Dispositif selon la revendication 5, caractérisé en ce que les moyens définissant l'espace annulaire (139) de couplage comprennent une gaine conductrice (141) qui entoure l'organe tubulaire (2) depuis le voisinage intérieur de l'un (133) des orifices latéraux du guide d'ondes jusqu'au-delà de l'autre orifice latéral (134), après quoi ladite gaine (141) s'écarte radialement de l'organe tubulaire (2) pour revenir longitudinalement (143) se relier à la paroi latérale (132) du guide d'ondes (130).

7. Dispositif selon la revendication 6, caractérisé en ce qu'il est prévu un organe mobile conducteur (145), à l'extérieur du guide d'ondes (130) entre la partie centrale de ladite gaine conductrice (141) et son retour longitudinal (143) vers la paroi (132) du guide (130).

8. Dispositif selon l'une des revendications 5 à 7, caractérisé en ce qu'il est prévu, du côté de l'orifice latéral (133) du guide d'ondes (130) qui crée l'espace annulaire de couplage, une entretoise conductrice (150) entourant le tube jusqu'au court-circuit, et contribuant à la définition d'un champ électrique hyperfréquence désiré dans ledit espace annulaire (139).

9. Dispositif selon l'une des revendications précédentes, caractérisé en ce que l'organe tubulaire (2) est réalisé en un matériau usinable possédant de faibles pertes diélectriques, comme le quartz, l'alumine ou l'oxyde de béryllium.

10. Dispositif selon l'une des revendications précédentes, caractérisé en ce qu'il comporte plusieurs applicateurs micro-ondes (130, 130A), répartis le long de l'organe tubulaire, entre les deux courts-circuits.

11. Dispositif selon l'une des revendications précédentes, caractérisé en ce que le tube (20) contenant le gaz possède une partie utile dont la longueur est de l'ordre de une à plusieurs dizaines de centimètres, pour un diamètre de l'ordre de un à plusieurs millimètres.

12. Dispositif selon l'une des revendications 2 à 8, ou 9 à 11, prises en dépendance de la revendication 2, caractérisé en ce que l'organe tubulaire (2) contient ou laisse passer une colonne d'un gaz ou vapeur propre à la fluorescence, ou d'un mélange de tels gaz ou vapeurs.

13. Dispositif selon la revendication 12, caractérisé en ce que l'un au moins des composants du

gaz est doué d'une densité électronique de $10^{13}$ à $10^{14}$ par centimètre cube, au moins.

14. Dispositif selon l'une des revendications 12 et 13, caractérisé en ce que le ou les gaz ou vapeurs sont choisis dans les matériaux du groupe comprenant l'argon, le krypton, l'hélium, le néon pour les gaz, le cadmium, l'or, l'argent, le cuivre pour les vapeurs.

15. Dispositif selon la revendication 14, caractérisé en ce que le gaz est un mélange d'argon et d'hélium.

16. Dispositif selon la revendication 15, caractérisé en ce que ledit mélange comprend de 40% à 75% d'hélium.

17. Dispositif selon la revendication 16, caractérisé en ce que le mélange comprend 50% d'hélium et d'argon.

18. Dispositif selon la revendication 15, caractérisé en ce que le mélange comprend une quantité substantielle de krypton, ce qui permet d'obtenir un effet laser double sur des longueurs d'ondes respectivement reliées à des raies d'excitation électronique de l'argon et du krypton.

**Patentansprüche**

1. Vorrichtung zur Anregung eines Plasmas in einer Gaskolonne mittels Mikrowellen, mit einem rohrförmigen Organ (2) zur Aufnahme der Gassäule, mit Mitteln (130—140) mit einem Mikrowellensender bilden und das rohrförmige Organ (2) umgeben und imstande sind, im Umfangsbereich des rohrförmigen Organs (2) ein elektrisches Mikrowellenfeld zu erzeugen, dessen Längs- und Radialkomponenten geeignet sind, ein Plasma in der Gaskolonne in der Nähe des Ringraumes anzuregen wobei mittels einer erzeugten Mikrowellen-Oberflächenwelle sich nach der einen oder anderen Seite des Ringraumes ausdehnt, dadurch gekennzeichnet, daß beidseits des Mikrowellensenders zwei Mikrowellenkurzschlußkreise (110, 120) mit dem rohrförmigen Organ (2) gekoppelt sind und derart eingestellt sind, daß sie das Plasma im Bereich des rohrförmigen Organs (2) einschließen, der zwischen den Kopplungsstellen (119, 120) mit den Kurzschlußkreisen eingeschlossen ist, so daß das Plasma, das über die Länge des rohrförmigen Organs (2) nicht homogen ist, der Ort stationärer Mikrowellen sehr starker Intensität ist.

2. Vorrichtung nach Anspruch 1, dadurch gekennzeichnet, daß die beiden Enden (21, 22) des rohrförmigen Organs (2), die jedes mit einem transparenten Fenster (23, 24) versehen sind, jeweils Spiegel (M1, M2) zur Reflektion in Längsrichtung eines großen Teils der elektromagnetischen Strahlung haben, die mit mindestens einer Spektrallinie der elektronischen Anregung des im Rohr enthaltenen Gases verbunden ist, wodurch ein Lasereffekt bewirkt wird.

3. Vorrichtung nach Anspruch 2, dadurch gekennzeichnet, daß das rohrförmige Organ (2) ein Kapillarrohr (20) aufweist, das an seinen Enden (21, 22) bei den Fenstern (23, 24) abgeschrägt ist, während sein Mittelteil ein Koaxialrohr (26) bildet, das sich mindestens von einem Kurzschlußkreis (119) zum anderen (129) erstreckt, und in dem ein Kühlfluid wie eine Flüssigkeit mit geringen dielektrischen Verlusten zirkuliert.

4. Vorrichtung nach Anspruch 3, dadurch gekennzeichnet, daß das Kühlfluid ein Silikonöl oder eine Mischung derartiger Öle ist.

5. Vorrichtung nach einem der vorangehenden Ansprüche, dadurch gekennzeichnet, daß der Mikrowellensender einen Wellenleiter (130) aufweist, der an einem Ende mit einer Verbindung zur Mikrowellenversorgung (135) versehen ist und an seinem anderen Ende ein Einstellorgan, wie einen Kolben (136) aufweist, während er im Mittelteil zwei Seitenöffnungen (133, 134) hat, durch die sich das Rohrorgan (2) erstreckt, und daß Mittel (140) vorgesehen sind, die den Ringraum (139) zur Kopplung des rohrförmigen Organs (2) mit dem Wellenleiter nach einer (133) der Seitenöffnungen desselben bilden.

6. Vorrichtung nach Anspruch 5, dadurch gekennzeichnet, daß die den Kopplungs-Ringraum (139) bildenden Mittel einen leitenden Mantel (141) aufweisen, der das rohrförmige Organ (2) vom Innenbereich einer (133) der beiden Seitenöffnungen des Wellenleiters bis zur anderen Seitenöffnung (134) umgibt, hinter der der Mantel (141) sich radial vom rohrförmigen Organ (2) erweitert, um sich in Längsrichtung wieder mit der Seitenwand (132) des Wellenleiters (130) zu verbinden.

7. Vorrichtung nach Anspruch 6, dadurch gekennzeichnet, daß ein bewegliches Leitfähigkeitsorgan (145) auf der Außenseite des Wellenleiters (130) zwischen dem Zentralbereich des leitfähigen Mantels (141) und seinem zur Wand (132) des Wellenleiters (139) zurückgerichteten Längsabschnitt (143) vorgesehen ist.

8. Vorrichtung nach einem der Ansprüche 5 bis 7, dadurch gekennzeichnet, daß seitlich der Seitenöffnung (133) des Wellenleiters (130), die den Kopplungsringraum (139) bildet, ein leitendes Zwischenstück (150) vorgesehen ist, das das Rohr bis zum Kurzschlußkreis umgibt und zur Bildung eines elektrischen Mikrowellenfeldes, das im Ringraum (139) gewünscht wird, beiträgt.

9. Vorrichtung nach einem der vorangehenden Ansprüche, dadurch gekennzeichnet, daß das Rohrorgan (2) aus einem bearbeitbaren Material mit geringen dielektrischen Verlusten, wie Quarz, Tonerde oder Berylliumoxid besteht.

10. Vorrichtung nach einem der vorangehenden Ansprüche, dadurch gekennzeichnet, daß sie mehrere Mikrowellensender (130, 130a) aufweist, die längs des Rohrorgans zwischen zwei Kurzschlußkreisen verteilt sind.

11. Vorrichtung nach einem der vorangehenden Ansprüche, dadurch gekennzeichnet, daß das Rohr (20), das das Gas enthält, einen Nutzbereich aufweist, dessen Länge in der Größenordnung von mehreren Dezimetern bei einem Durchmesser in der Größenordnung von mehreren Millimetern liegt.

12. Vorrichtung nach einem der Ansprüche 2 bis 8 oder 9 bis 11, letztere in Verbindung mit Anspruch 2, dadurch gekennzeichnet, daß das Rohrorgan (2) von einem fluoreszierenden Gas oder Dampf oder einer Mischung solcher Gase oder Dämpfe geschlossen ist bzw. diese enthält.

13. Vorrichtung nach Anspruch 12, dadurch gekennzeichnet, daß wenigstens eine der Komponenten des Gases eine elektronische Dichte von wenigstens $10^{13}$ bis $10^{14}$ pro Kubikzentimeter aufweist.

14. Vorrichtung nach einem der Ansprüche 12 und 13, dadurch gekennzeichnet, daß das Gas oder die Dämpfe aus der folgenden Gruppe ausgewählt ist: Argon, Krypton, Helium, Neon für die Gase sowie Kadmium, Gold, Silber, Kupfer für die Dämpfe.

15. Vorrichtung nach Anspruch 14, dadurch gekennzeichnet, daß das Gas eine Mischung von Argon und Helium ist.

16. Vorrichtung nach Anspruch 15, dadurch gekennzeichnet, daß die Mischung 40 bis 75% Helium aufweist.

17. Vorrichtung nach Anspruch 16, dadurch gekennzeichnet, daß die Mischung 50% Helium und Argon aufweist.

18. Vorrichtung nach Anspruch 15, dadurch gekennzeichnet, daß die Mischung einen substantiellen Anteil an Krypton aufweist, wodurch ein doppelter Lasereffekt über die Wellenlängen, die mit den elektronischen Anregungslinien von Argon und Krypton verbunden sind, erreichbar ist.

**Claims**

1. A device for exciting a plasma in a gas column by ultrahigh-frequency waves, of the type comprising:

a tubular member (2) adapted to contain the gas column;

means (130—140) forming a microwave applicator, surrounding the tubular member and coupled to this by an annular space (139) adapted to create, at the periphery of this tubular member, an ultrahigh-frequency electrical field of which the longitudinal and radial components are adapted to excite a plasma in said gas column in the vicinity of said annular space, a direct ultrahigh-frequency wave being created in the gas, by means of which wave, the plasma spreads at each side of said annular space, characterised in that provided at each side of this applicator there are two ultrahigh-frequency short-circuits (110, 120) coupled to the tubular member (2) and adjusted to confine the plasma in the portion of the tubular member (2) which is comprised between its couplings (119, 129) to said short-circuits, the plasma, which is not homogenous along the tubular member, then being the seat of standing ultra-high-frequency waves of very great intensity.

2. A device according to Claim 1, characterised in that the two ends (21, 22) of the tubular member, each equipped with a transparent window, (23, 24), are respectively equipped with mirrors (M1, M2) adapted to reflect longitudinally a large portion of the electromagnetic radiation associated with at least one of the lines of electronic excitation of the gas contained in the tube, which enables a laser effect to be obtained.

3. A device according to Claim 2, characterised in that the tubular member comprises a capillary tube (20) which widens out at its ends (21, 22) towards said windows (23, 24), while its intermediate portion defines a coaxial annular tubing (26) which extends at least from one short-circuit (119) to the other (129), and in which there circulates a cooling fluid such as a liquid with low dielectric losses.

4. A device according to Claim 3, characterised in that the cooling fluid is a silicon oil or a mixture of such oils.

5. A device according to any one of the preceding Claims, characterised in that the microwave applicator comprises a waveguide (130) equipped at one end with an ultrahigh-frequency supply connection (135) and at its other end with a matching element such as a piston (136), while it comprises, in the intermediate portion, two lateral orifices (133, 134) permitting the passage of the tubular member (2), and means (140) which define said annular space (139) for coupling the tubular member (2) to the waveguide, close to one (133) of the lateral orifices in this.

6. A device according to Claim 5, characterised in that the means defining the annular coupling space (139) comprise a conductive sheath (141) which surrounds the tubular member (2) from the vicinity inside one (133) of the lateral orifices in the waveguide to beyond the other lateral orifice (134), after which said sheath (141) extends radially away from the tubular member (2) to return longitudinally (143) and be connected to the lateral wall (132) of the waveguide (130).

7. A device according to Claim 6, characterized in that a movable conductive member (145) is provided outside the waveguide (130) between the central portion of said conductive sheath (141) and its longitudinal return (143) towards the wall (132) of the guide (130).

8. A device according to any one of Claims 5 to 7, characterised in that, at the side where the lateral orifice (133) in the waveguide (130) creates the annular coupling space, there is provided a conductive distance-piece (150) surrounding the tube as far as the short-circuit and contributing to the definition of a desired ultrahigh-frequency electric field in said annular space (139).

9. A device according to any one of the preceding Claims, characterised in that the tubular member (2) is made of a machinable material having low dielectric losses, such as quartz, aluminium or beryllium oxide.

10. A device according to any one of the preceding Claims, characterised in that it comprises a plurality of microwave applicators (130, 130A) distributed along the tubular member, between the two short-circuits.

11. A device according to any one of the preceding Claims, characterised in that the tube (20) containing the gas has a useful portion, the length of which is of the order of one to several tens of centimetres for a diameter of the order of one to several millimetres.

12. A device according to any one of Claims 2 to 8 or 9 to 11, considered depending on Claim 2, characterised in that the tubular member (2) contains or affords passage to a column of gas or vapour adapted for fluorescence, or of a mixture of such gases or vapours.

13. A device according to Claim 12, characterised in that at least one of the components of the gas has an electron density of at least $10^{13}$ to $10^{14}$ per cubic centimetre.

14. A device according to either one of Claims 12 and 13, characterised in that the gas or gases, or vapour or vapours are selected from the materials in the group comprising argon, krypton, helium and neon for the gases, and cadmium, gold, silver, and copper for the vapours.

15. A device according to Claim 14, characterised in that the gas is a mixture of argon and helium.

16. A device according to Claim 15, characterised in that said mixture comprises from 40% to 75% of helium.

17. A device according to Claim 16, characterised in that the mixture comprises 50% of helium and of argon.

18. A device according to Claim 15, characterised in that the mixture comprises a substantial quantity of krypton, which enables a double laser effect to be obtained on wavelenghts respectively linked with electronic excitation lines of argon and of krypton.

FIG.1

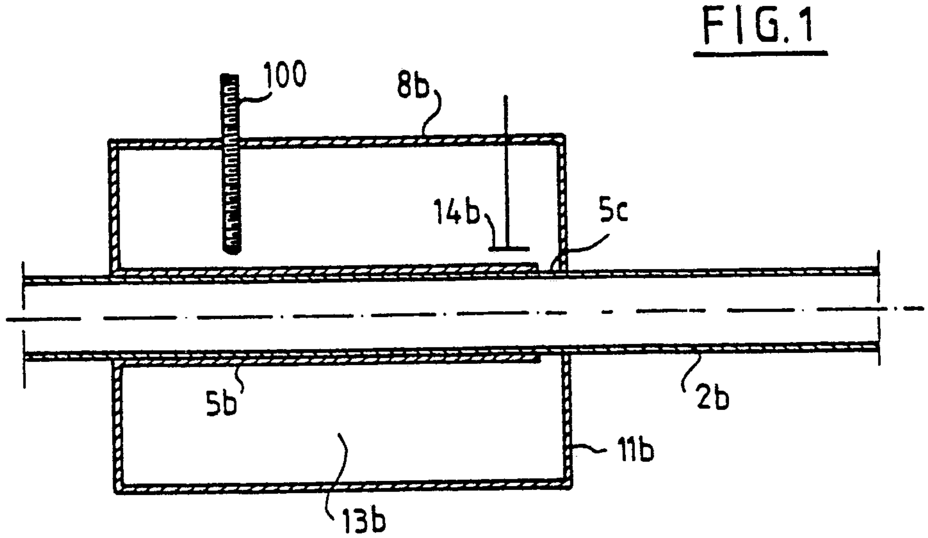


FIG.2

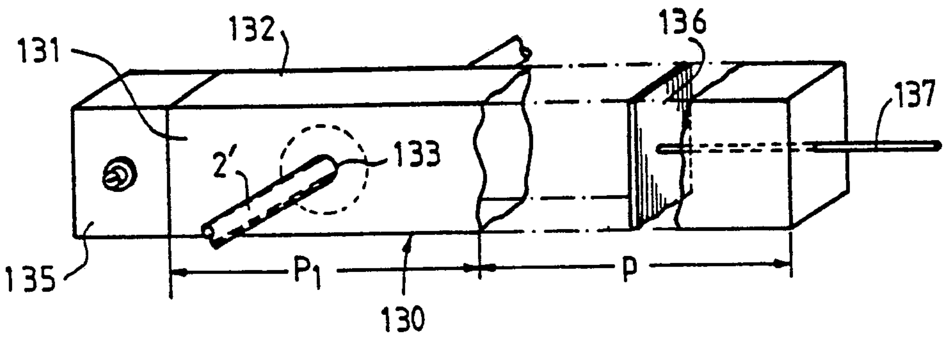


FIG. 2A

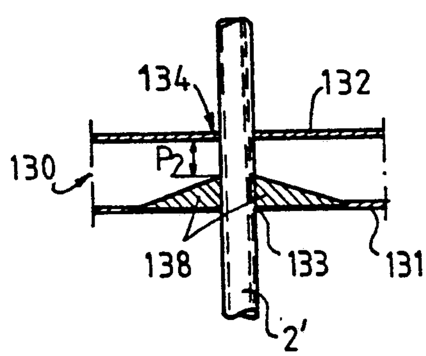

FIG. 3

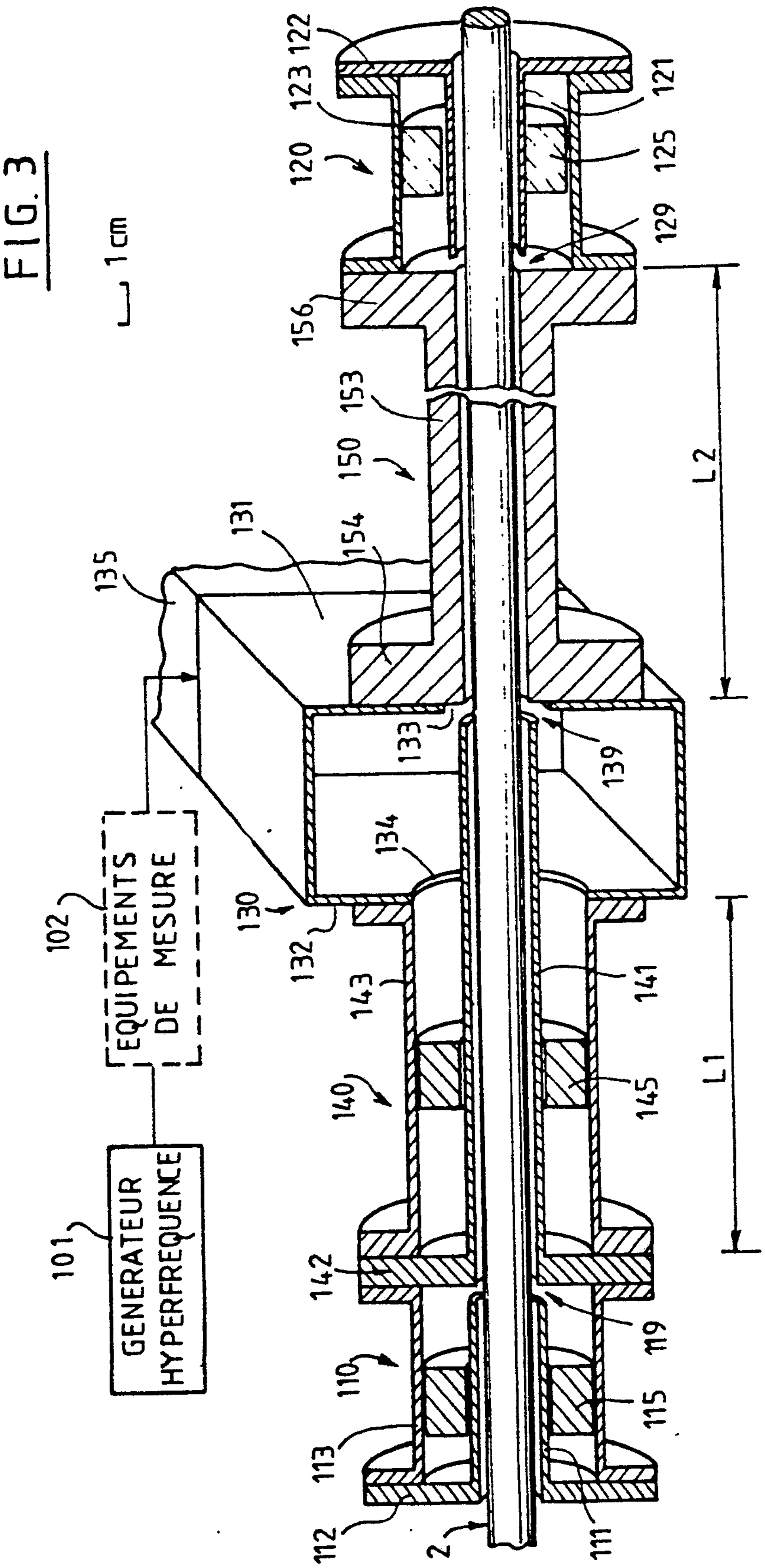
1cm
GENERATEUR HYPERFREQUENCE
EQUIPEMENTS DE MESURE
101
102
110
111
112
113
115
119
120
121
122
123
125
129
130
131
132
133
134
135
139
140
141
142
143
145
150
153
154
156
2
L1
L2

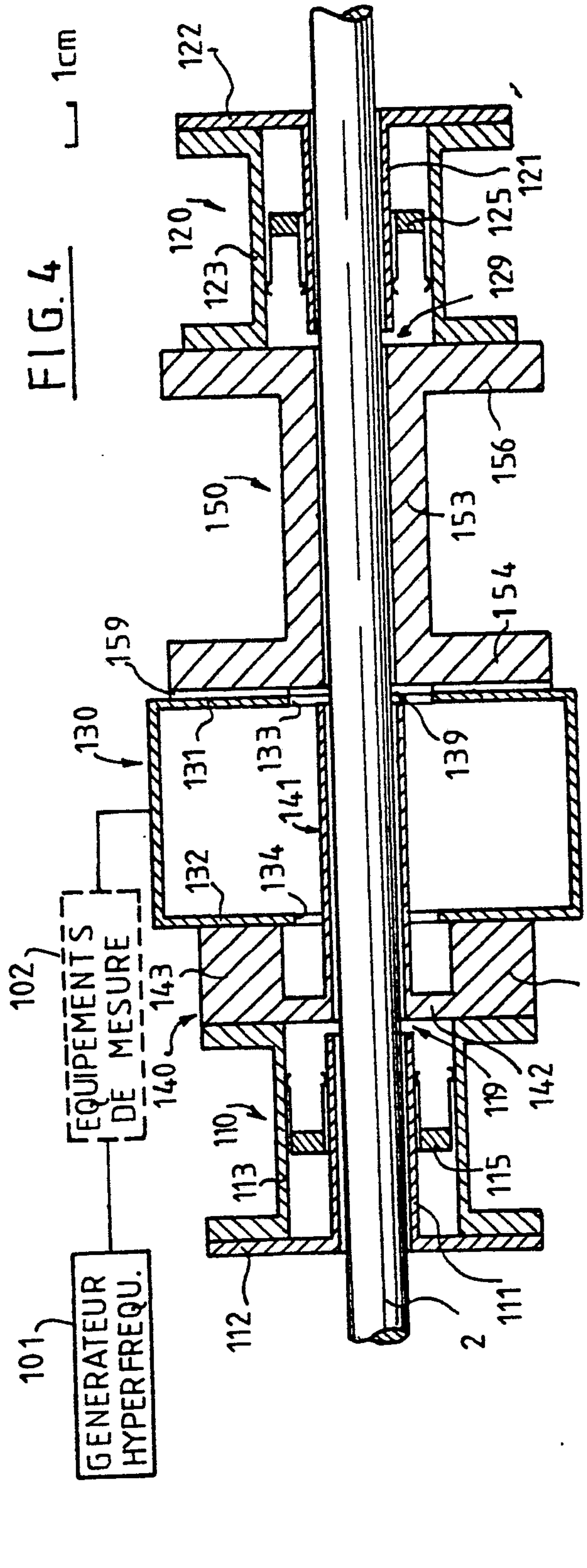
1cm
GENERATEUR HYPERFREQU.
101
EQUIPEMENTS DE MESURE
102
2
110
111
112
113
115
119
120
121
122
123
125
129
130
131
132
133
134
139
140
141
142
143
150
153
154
156
159

FIG. 4

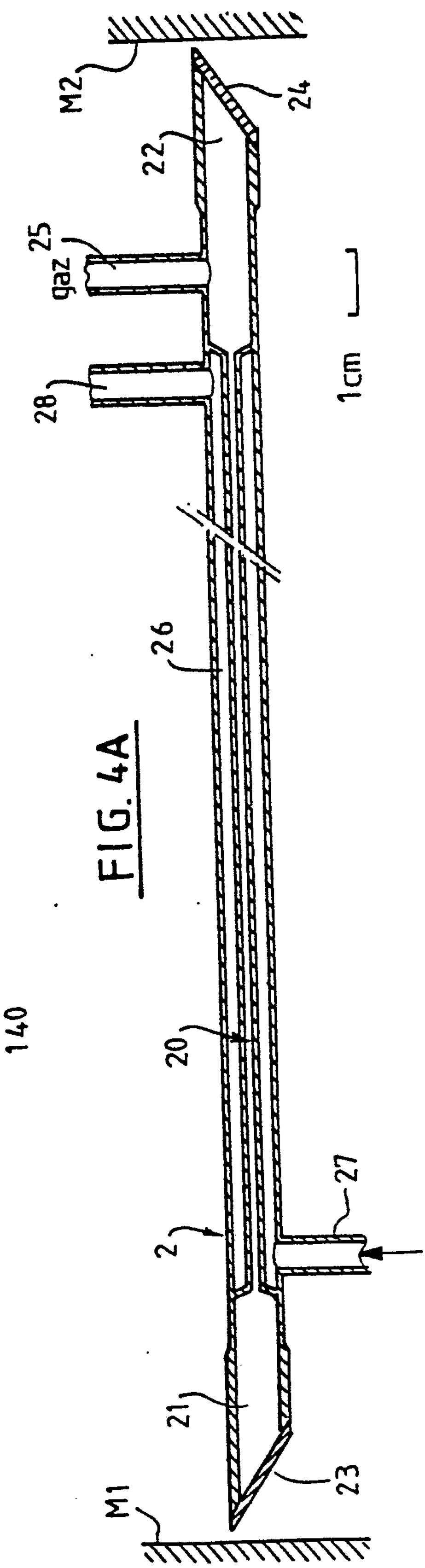
M1
M2
2
20
21
22
23
24
25
26
27
28
gaz
huile
1cm

FIG. 4A

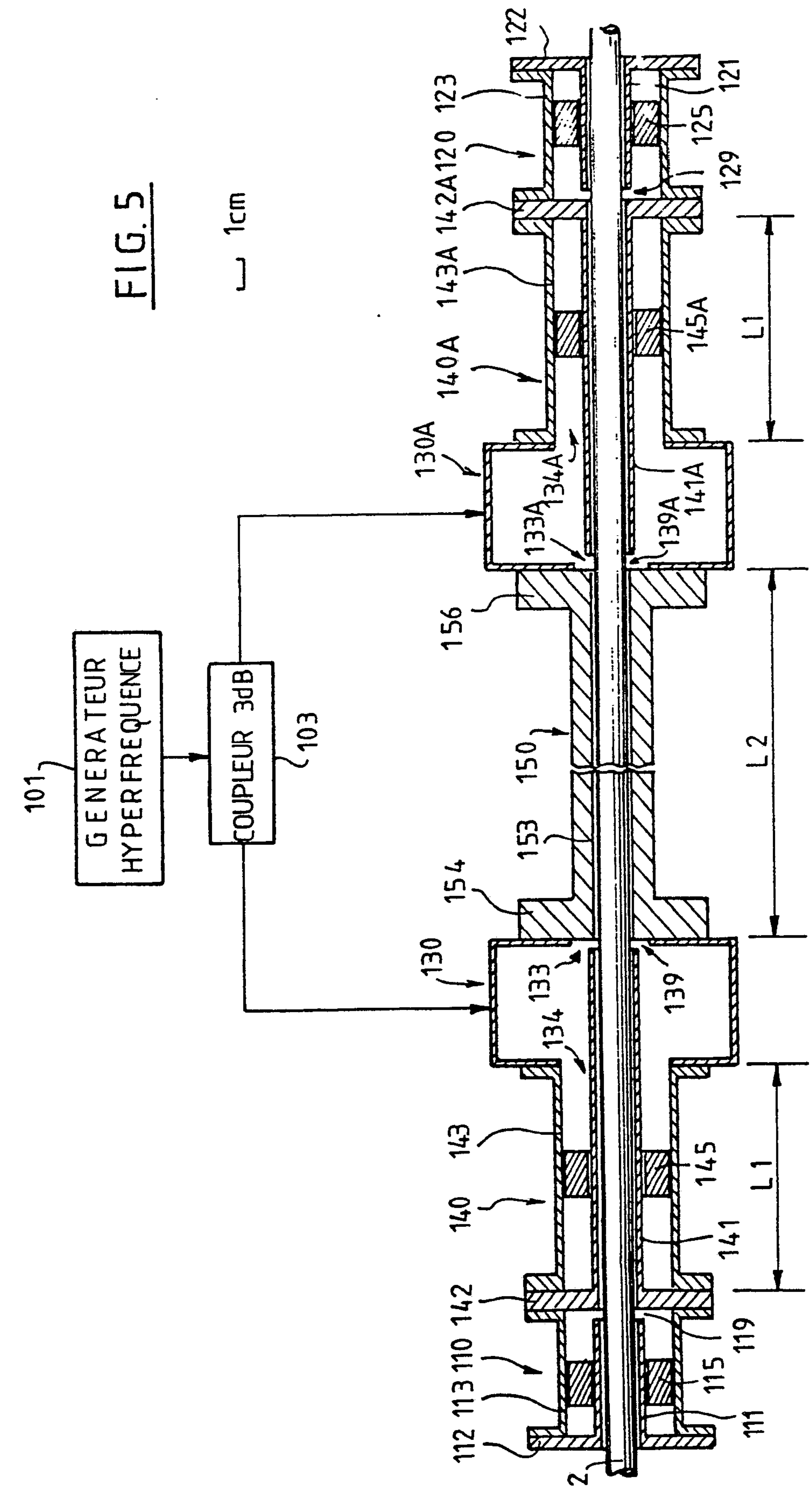
GENERATEUR HYPERFREQUENCE
101
COUPLEUR 3dB
103
1cm
122
121
123
125
120
129
142A
143A
145A
140A
L1
130A
134A
133A
139A
141A
156
150
L2
153
154
130
133
134
139
143
145
140
141
L1
142
119
110
113
115
112
111
2

FIG. 5

FIG. 6

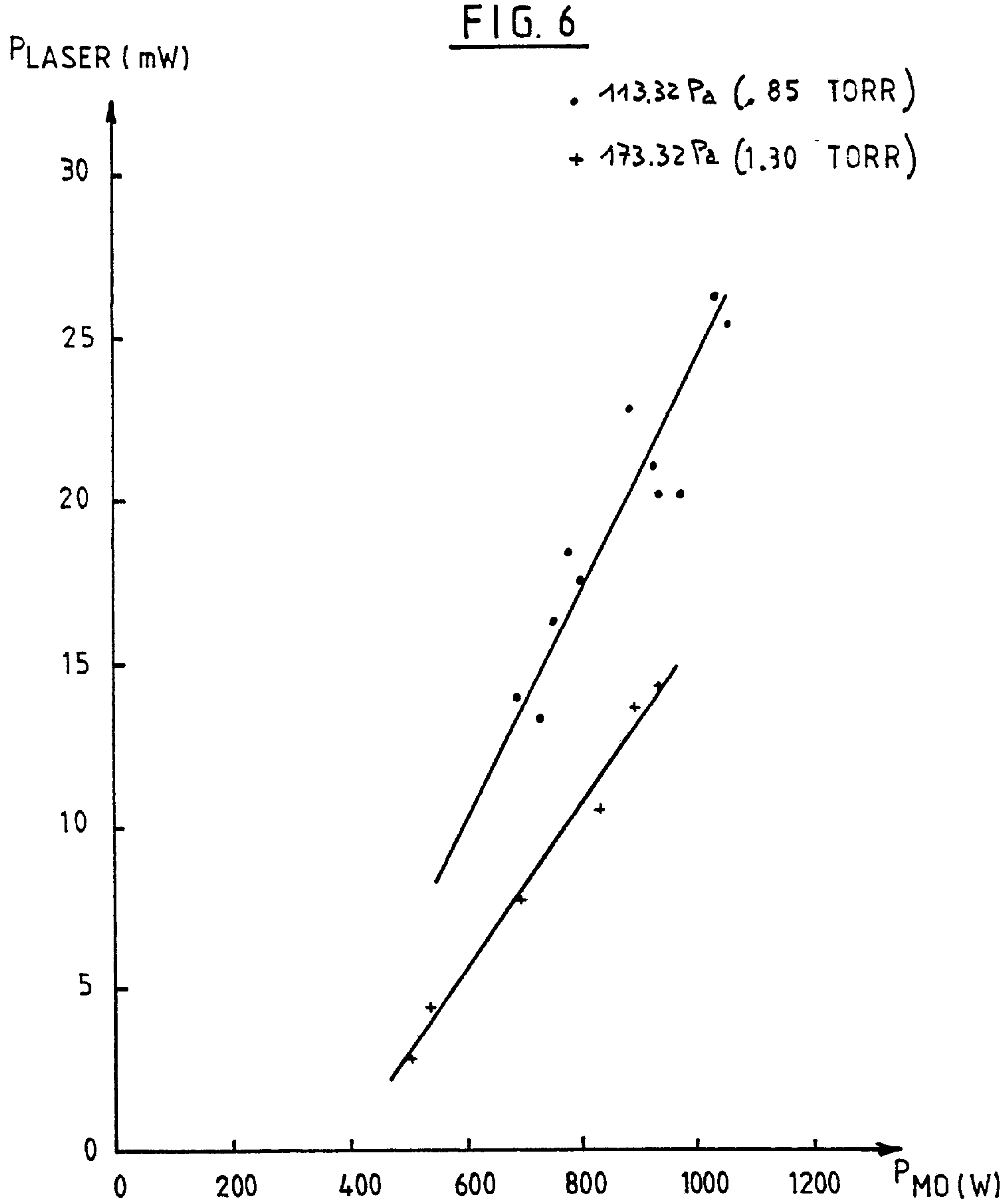
PLASER (mW)
• 113.32 Pa (.85 TORR)
+ 173.32 Pa (1.30 TORR)
30
25
20
15
10
5
0
0
200
400
600
800
1000
1200
PMO (W)

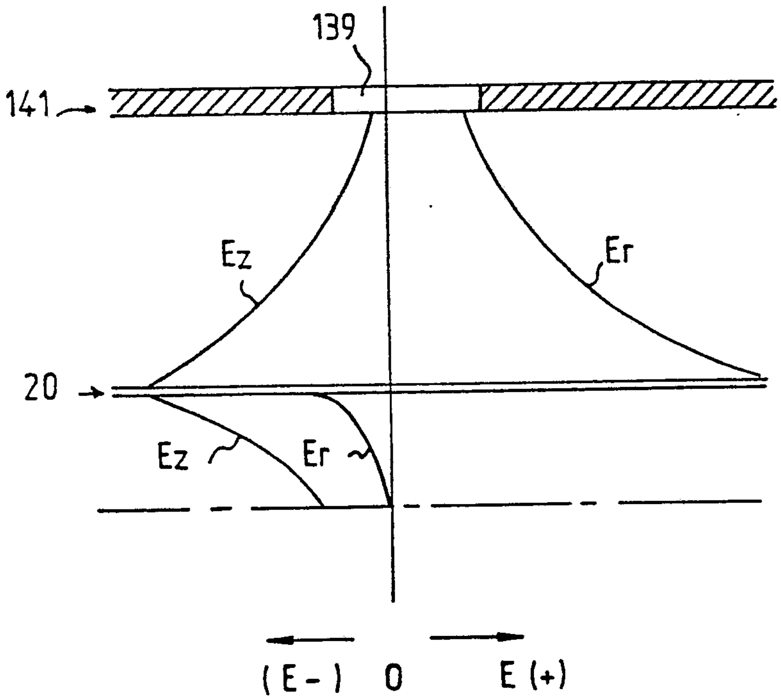


FIG. 7